# FASCICULE DE BREVET EUROPEEN

(11) **EP 2 033 848 B1**
(45) Date de publication et mention de la délivrance du brevet: **20.01.2010**
(21) Numéro de dépôt: 08160759.0
(22) Date de dépôt: 18.07.2008
(51) Int. Cl.: B60R 13/04, B62D 25/04, B62D 25/08

(54) **Ensemble enjoliveur de pare-brise/grille d'auvent pour véhicule automobile**
Zierelement für Windschutzscheibe/Windlaufgrill eines Kraftfahrzeugs
Trim assembly for a windscreen/cowl vent grille for an automobile.

(30) Priorité: 07.09.2007 FR 0757416
(43) Date de publication de la demande: 11.03.2009
(73) Titulaire: PEUGEOT CITROËN AUTOMOBILES S.A., 78140 Vélizy Villacoublay (FR)
(72) Inventeur: Steinmetz, Gérard, 25200, Montbeliard (FR); Mougey, Michaël, 25200, Montbeliard (FR)
(74) Mandataire: Fernandez, Francis Lionel

(56) Documents cités:
- DE-A- 3 519 940
- US-A- 5 451 090
- US-A- 5 667 271
- US-B2- 7 118 169

## Description

La présente invention concerne un ensemble pour véhicule automobile, du type comprenant un enjoliveur de pare-brise et une grille d'auvent destinés chacun à être fixés sur la structure du véhicule (cf US 5451090 A).

Le placage d'un enjoliveur de pare-brise est particulièrement critique en zone basse de pare-brise. Le placage permet de garantir la qualité jeu et affleurement dans cette zone ainsi que le non déplacage de l'enjoliveur, qui est particulièrement soumis aux efforts aérodynamiques en zone basse de pare-brise.

L'intégration d'une fixation positive est complexe dans cette zone compte tenu notamment des fortes dispersions de montage des pièces environnantes et des fortes dilatations auxquelles elles sont soumises, ces pièces étant généralement en matière plastique.

L'invention a pour but d'améliorer, de façon simple et peu coûteuse, le placage de l'enjoliveur en zone basse de pare-brise.

A cet effet, l'invention a pour objet un ensemble pour véhicule automobile du type précité, caractérisé en ce que l'enjoliveur et la grille comportent, sur leurs extrémités adjacentes respectives, des moyens propres à exercer sur ladite extrémité un couple de placage de l'enjoliveur sur le pare-brise autour d'une première direction sensiblement parallèle à l'axe longitudinal du véhicule.

L'ensemble selon l'invention peut comporter une ou plusieurs des caractéristiques suivantes :
- les moyens de placage comprennent un doigt élastique solidaire de l'enjoliveur, une lumière étant pratiquée dans la grille et recevant le doigt déformé élastiquement ;
- le doigt s'applique, sous déformation élastique, sur la tranche intérieure de la lumière, suivant une deuxième direction sensiblement parallèle à l'axe transversal du véhicule ;
- suivant ladite deuxième direction et du côté de la tranche extérieure de la lumière, la lumière reçoit avec jeu le doigt ;
- suivant ladite première direction, la lumière reçoit le doigt avec un jeu de part et d'autre du doigt ;
- les jeux entre le doigt et la lumière sont inférieurs ou égaux à 4 mm ; et
- le doigt possède un ergot d'accrochage adapté pour maintenir le doigt dans la lumière.

L'invention a également pour objet un véhicule automobile, du type comprenant une structure comportant un montant de baie et un tablier de séparation du compartiment moteur et de l'habitacle, caractérisé en ce qu'il comprend un ensemble tel que décrit précédemment, l'enjoliveur de pare-brise étant fixé sur le montant de baie et la grille d'auvent étant fixée au tablier.

L'invention sera mieux comprise à la lecture de la description qui va suivre, donnée uniquement à titre d'exemple et faite en se référant aux dessins annexés, sur lesquels :
- la Figure 1 est une vue en perspective d'une partie d'un véhicule automobile comprenant un ensemble selon l'invention, vue depuis l'extérieur du véhicule ;
- la Figure 2 est une vue similaire à celle de la Figure 1, vue depuis l'intérieur du véhicule ;
- la Figure 3 est une vue similaire à celle de la Figure 2 montrant en détail une partie de l'ensemble de la Figure 1 ;
- la Figure 4 est une vue en perspective agrandie d'une autre partie de l'ensemble de la Figure 1, vue depuis l'extérieur du véhicule ;
- la Figure 5 est une vue en perspective des moyens de placage de l'ensemble de la Figure 1 ; et
- la Figure 6 est une vue en coupe verticale transversale suivant le plan P de la Figure 5.

Afin de simplifier la description qui va suivre, les figures ont été orientées suivant le système d'axes X, Y, Z définissant l'orientation usuelle d'un véhicule automobile, et dans lequel :
- l'axe X est l'axe longitudinal du véhicule, orienté d'arrière en avant ;
- l'axe Y est l'axe transversal orienté de droite à gauche ; et
- l'axe Z est l'axe vertical orienté du bas vers le haut.

Les termes de position et d'orientation qui sont utilisés par la suite s'entendent par rapport à ce système d'axes.

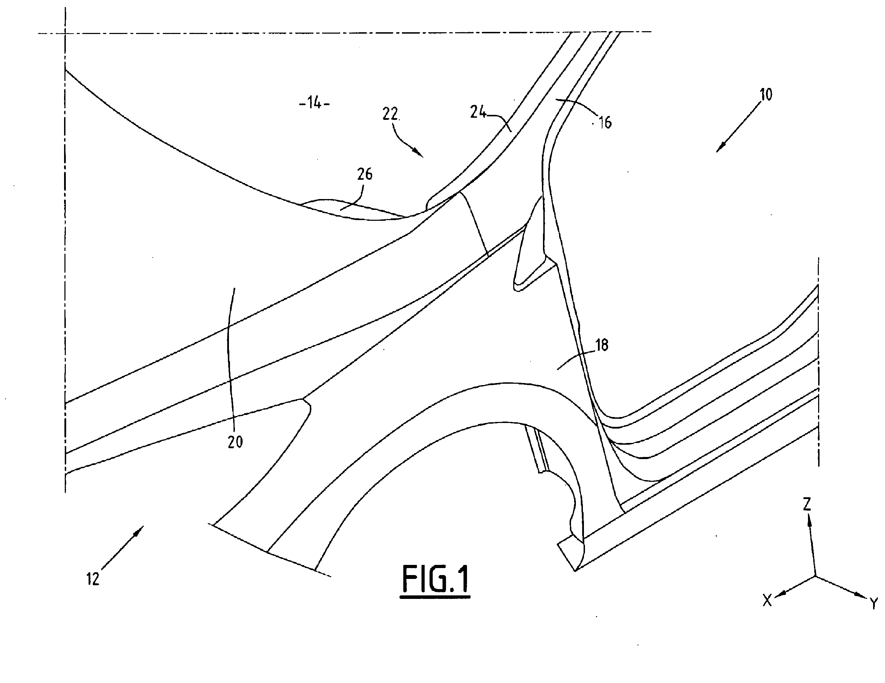

La Figure 1 illustre, de façon simplifiée, la partie avant gauche 10 d'un véhicule automobile 12.

La partie avant gauche 10 comporte un pare-brise avant 14, un montant de baie avant gauche 16, une aile avant gauche 18, un capot-moteur 20 et un ensemble 22.

L'ensemble 22 comprend un enjoliveur de pare-brise 24 et une grille d'auvent 26, chacun fixés sur la structure du véhicule 12.

L'enjoliveur 24 est disposé le long du côté extérieur gauche du pare-brise 14, le long du montant de baie 16, et est fixé sur le montant de baie 16, notamment par clippage de l'enjoliveur 24 dans des agrafes fixées sur la caisse du véhicule 12.

La grille 26 s'étend dans une direction sensiblement parallèle à l'axe transversal Y du véhicule 12, entre le pare-brise 14 et le capot-moteur 20, et est fixée à un tablier de séparation du compartiment moteur et de l'habitacle du véhicule 12, lui-même fixé à la base du pare-brise 14.

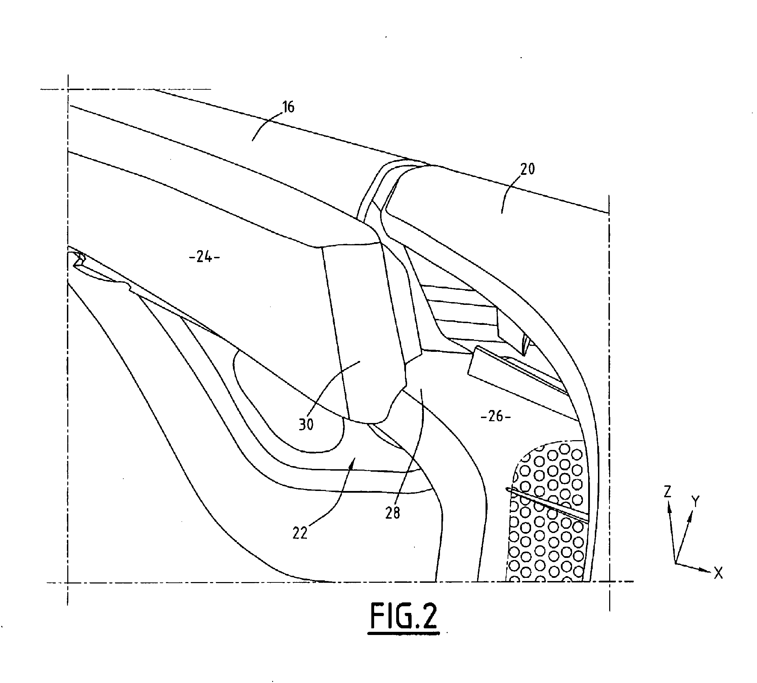

Comme on le voit mieux sur la Figure 2, où le pare-brise 14 a été retiré, la grille 26 est prolongée latéralement sur son extrémité gauche 28 de sorte que cette dernière soit située de façon adjacente à l'extrémité inférieure 30 de l'enjoliveur 24.

L'enjoliveur 24 et la grille 26 comportent, sur leurs extrémités adjacentes respectives 28, 30, des moyens 32 propres à exercer sur l'extrémité 30 de l'enjoliveur 24 un couple de placage C de celui-ci sur le pare-brise 14 autour d'une direction sensiblement parallèle à l'axe longitudinal X du véhicule 12.

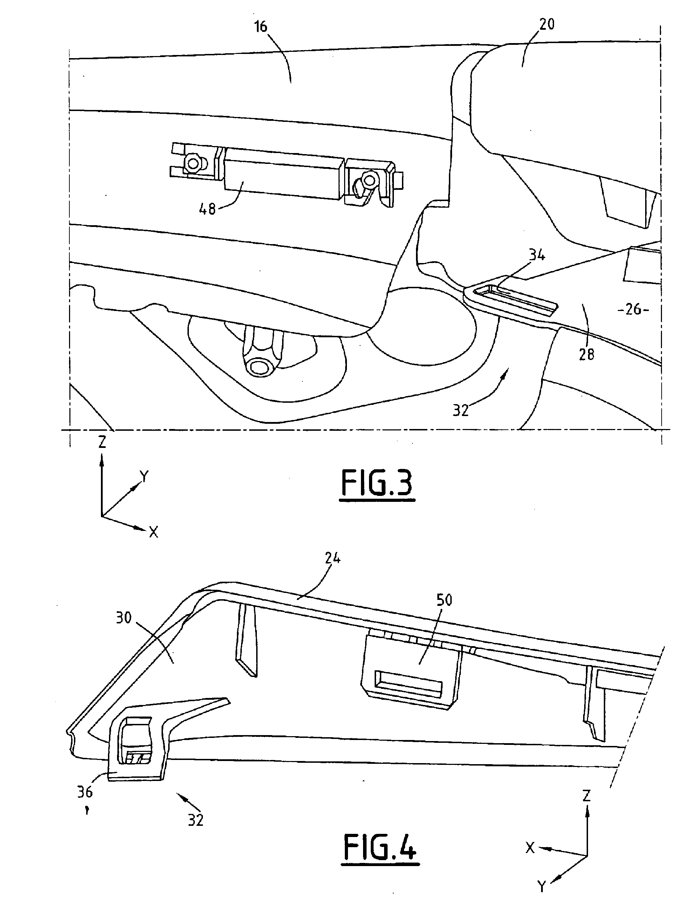

Les moyens de placage 32 comprennent une lumière 34 de forme sensiblement rectangulaire pratiquée dans l'extrémité gauche 28 de la grille 26 (Figure 3) et destinée à recevoir un doigt élastique 36 faisant saillie de l'extrémité inférieure 30 de l'enjoliveur 24 (Figure 4).

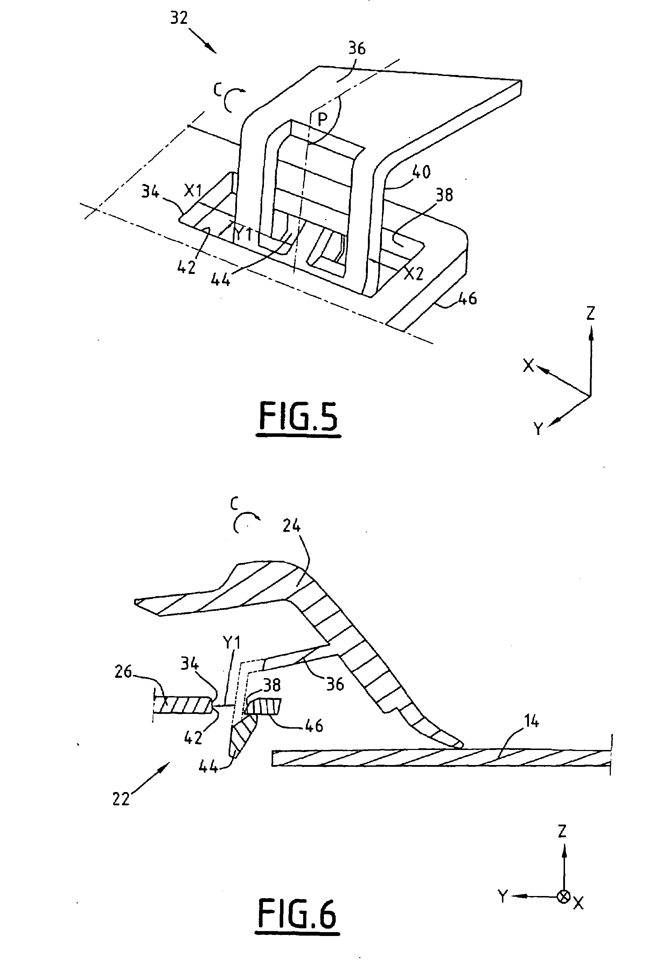

En référence aux Figures 5 et 6, suivant une direction sensiblement parallèle à l'axe transversal Y du véhicule 12 et du côté de la tranche intérieure 38 de la lumière 34, la lumière 34 reçoit sans jeu le doigt 36, lequel est appliqué sous déformation élastique contre la tranche 38.

La face intérieure 40 du doigt 36 est ainsi mise en tension contre la tranche intérieure 38 de la lumière 34, créant de ce fait un couple de placage C autour d'une direction sensiblement parallèle à l'axe longitudinal X du véhicule 12, ce qui plaque l'enjoliveur 24 contre le pare-brise 14.

Afin de ne pas soumettre l'enjoliveur 24 à un couple inverse du couple de placage C, la lumière 34 reçoit avec un jeu Y1 le doigt 36 suivant une direction sensiblement parallèle à l'axe transversal Y du véhicule 12 et du côté de la tranche extérieure 42 de la lumière 34.

Ce jeu Y1 permet non seulement d'éviter le déplacage de l'enjoliveur 24, mais également de tenir compte des dispersions de montage et des dilatations de la grille 26 suivant une direction sensiblement parallèle à l'axe transversal Y du véhicule 12.

Suivant une direction sensiblement parallèle à l'axe longitudinal X du véhicule 12, la lumière 34 reçoit avec jeu le doigt 36, de part et d'autre de celui-ci.

Ces jeux X1, X2 permettent de tenir compte des dispersions de montage et des dilatations de l'enjoliveur 24 suivant une direction sensiblement parallèle à l'axe longitudinal X du véhicule 12.

Les différents jeux Y1, X1, X2 créés entre le doigt 36 et la lumière 34 sont inférieurs ou égaux à 4 mm.

Afin de maintenir le doigt 36 dans la lumière 34 suivant une direction sensiblement parallèle à l'axe vertical Z du véhicule 12, le doigt 36 possède un ergot d'accrochage 44 adapté pour buter contre la face inférieure 46 de la grille 26.

Dans l'exemple de réalisation, l'enjoliveur 24 est fixé sur le montant de baie 16 par un clip dont une première partie 48 est fixée sur le montant de baie 16 (Figure 3) et une deuxième partie 50 est intégrée sur l'enjoliveur 24 (Figure 4).

L'ensemble selon l'invention permet donc d'obtenir, de façon simple et peu coûteuse, un placage correct de l'enjoliveur en zone basse de pare-brise, qui tient compte notamment des dispersions de montage et des dilatations des différentes pièces.

## Revendications

1. Ensemble (22) pour véhicule automobile (12), du type comprenant un enjoliveur de pare-brise (24) et une grille d'auvent (26) destinés chacun à être fixés sur la structure du véhicule (12), **caractérisé en ce que** l'enjoliveur (24) et la grille (26) comportent, sur leurs extrémités adjacentes respectives (28, 30), des moyens (32) propres à exercer sur ladite extrémité (30) de l'enjoliveur un couple de placage (C) de l'enjoliveur (24) sur le pare-brise (14) autour d'une première direction sensiblement parallèle à l'axe longitudinal (X) du véhicule (12).

2. Ensemble (22) selon la revendication 1, **caractérisé en ce que** les moyens de placage (32) comprennent un doigt élastique (36) solidaire de l'enjoliveur (24), une lumière (34) étant pratiquée dans la grille (26) et recevant le doigt (36) déformé élastiquement.

3. Ensemble (22) selon la revendication 2, **caractérisé en ce que** le doigt (36) s'applique, sous déformation élastique, sur la tranche intérieure (38) de la lumière (34), suivant une deuxième direction sensiblement parallèle à l'axe transversal (Y) du véhicule (12).

4. Ensemble (22) selon la revendication 2 ou 3, **caractérisé en ce que**, suivant ladite deuxième direction et du côté de la tranche extérieure (42) de la lumière (34), la lumière (34) reçoit avec jeu (Y1) le doigt (36).

5. Ensemble (22) selon l'une quelconque des revendications 2 à 4, **caractérisé en ce que**, suivant ladite première direction, la lumière (34) reçoit le doigt (36) avec un jeu (X1, X2) de part et d'autre du doigt (36).

6. Ensemble (22) selon la revendication 4 ou 5, **caractérisé en ce que** les jeux (Y1, X1, X2) entre le doigt (36) et la lumière (34) sont inférieurs ou égaux à 4 mm.

7. Ensemble (22) selon l'une quelconque des revendications 2 à 6, **caractérisé en ce que** le doigt (36) possède un ergot d'accrochage (44) adapté pour maintenir le doigt (36) dans la lumière (34).

8. Véhicule automobile (12), du type comprenant une structure comportant un montant de baie (16) et un tablier de séparation du compartiment moteur et de l'habitacle, **caractérisé en ce qu'**il comprend une ensemble (22) selon l'une quelconque des revendications précédentes, l'enjoliveur de pare-brise (24) étant fixé sur le montant de baie (16) et la grille d'auvent (26) étant fixée au tablier.

## Claims

1. Assembly (22) for a motor vehicle (12), of the type comprising a windscreen trim element (24) and a cowl grille (26) each intended to be fixed to the structure of the vehicle (12), **characterized in that** the trim element (24) and the grille (26) comprise, on their respective adjacent ends (28, 30), means (32) able to apply to the said end (30) of the trim element, a moment (C) that presses the trim element (24) firmly onto the windscreen (14) about a first direction substantially parallel to the longitudinal axis (X) of the vehicle (12).

2. Assembly (22) according to Claim 1, **characterized in that** the pressing means (32) comprise an elastic finger (36) secured to the trim element (24), a slot (34) being made in the grille (26) and accepting the elastically deformed finger (36).

3. Assembly (22) according to Claim 2, **characterized in that** the finger (32) is pressed, under elastic deformation, against the interior edge face (38) of the slot (34), in a second direction substantially parallel to the transverse axis (Y) of the vehicle (12).

4. Assembly (22) according to Claim 2 or 3, **characterized in that**, in the said second direction and on the side of the exterior edge face (42) of the slot (34), the slot (34) accommodates the finger (36) with clearance (Y1).

5. Assembly (22) according to any one of Claims 2 to 4, **characterized in that**, in the said first direction, the slot (34) accommodates the finger (36) with a clearance (X1, X2) on each side of the finger (36).

6. Assembly (22) according to Claim 4 or 5, **characterized in that** the clearances (Y1, X1, X2) between the finger (36) and the slot (34) are less than or equal to 4 mm.

7. Assembly (22) according to any one of Claims 2 to 6, **characterized in that** the finger (36) has a catching peg (34) designed to keep the finger (36) in the slot (34).

8. Motor vehicle (12) of the type comprising a structure comprising an aperture upright (16) and a bulkhead separating the engine compartment from the passenger compartment, **characterized in that** it comprises an assembly (22) according to any one of the preceding claims, the windscreen trim element (24) being fixed to the aperture upright (16) and the cowl vent grille (26) being fixed to the bulkhead.

## Patentansprüche

1. Baueinheit (22) für ein Kraftfahrzeug (12), von der Art, die eine Windschutzscheiben-Zierleiste (24) und einen Windlaufgrill (26) enthält, welche je dazu bestimmt sind, am Aufbau des Fahrzeugs (12) befestigt zu werden, **dadurch gekennzeichnet, dass** die Zierleiste (24) und der Grill (26) an ihren jeweiligen benachbarten Enden (28, 30) Einrichtungen (32) aufweisen, die auf das Ende (30) der Zierleiste ein Andrückmoment (C) der Zierleiste (24) auf die Windschutzscheibe (14) um eine erste Richtung im Wesentlichen parallel zur Längsachse (X) des Fahrzeugs (12) ausüben können.

2. Baueinheit (22) nach Anspruch 1, **dadurch gekennzeichnet, dass** die Andrückeinrichtungen (32) einen elastischen Finger (36) enthalten, der fest mit der Zierleiste (24) verbunden ist, wobei eine Öffnung (34) im Grill (26) angebracht ist und den elastisch verformten Finger (36) aufnimmt.

3. Baueinheit (22) nach Anspruch 2, **dadurch gekennzeichnet, dass** der Finger (36) sich unter elastischer Verformung auf die Innenkante (38) der Öffnung (34) gemäß einer zweiten Richtung im Wesentlichen parallel zur Querachse (Y) des Fahrzeugs (12) auflegt.

4. Baueinheit (22) nach Anspruch 2 oder 3, **dadurch gekennzeichnet, dass** die Öffnung (34) den Finger (36) gemäß der zweiten Richtung und auf der Seite der Außenkante (42) der Öffnung (34) mit einem Spiel (Y1) aufnimmt.

5. Baueinheit (22) nach einem der Ansprüche 2 bis 4, **dadurch gekennzeichnet, dass** die Öffnung (34) den Finger (36) gemäß der ersten Richtung mit einem Spiel (X1, X2) zu beiden Seiten des Fingers (36) aufnimmt.

6. Baueinheit (22) nach Anspruch 4 oder 5, **dadurch gekennzeichnet, dass** die Spiele (Y1, X1, X2) zwischen dem Finger (36) und der Öffnung (34) geringer als oder gleich 4 mm sind.

7. Baueinheit (22) nach einem der Ansprüche 2 bis 6, **dadurch gekennzeichnet, dass** der Finger (36) einen Befestigungszapfen (44) besitzt, der geeignet ist, um den Finger (36) in der Öffnung (34) zu halten.

8. Kraftfahrzeug (12) von dem Typ, das einen Aufbau enthält, der eine Fenstersäule (16) und eine Trennwand zwischen Motorraum und Fahrgastraum aufweist, **dadurch gekennzeichnet, dass** es eine Baueinheit (22) nach einem der vorhergehenden Ansprüche enthält, wobei die Windschutzscheiben-Zierleiste (24) an der Fenstersäule (16) und der Windlaufgrill (26) an der Trennwand befestigt ist.
